Europäisches Patentamt

European Patent Office

Office européen des brevets

(11) Veröffentlichungsnummer: **0 203 416**
**B1**

(12) **EUROPÄISCHE PATENTSCHRIFT**

(45) Veröffentlichungstag der Patentschrift:
01.03.89

(51) Int. Cl.⁴: **F 16 B 13/14**

(21) Anmeldenummer: **86106085.3**

(22) Anmeldetag: **02.05.86**

(54) **Verankerung einer Gewindestange mittels einer Verbundmasse.**

(30) Priorität: **10.05.85 DE 3516866**

(43) Veröffentlichungstag der Anmeldung:
**03.12.86 Patentblatt 86/49**

(45) Bekanntmachung des Hinweises auf die Patenterteilung:
**01.03.89 Patentblatt 89/9**

(84) Benannte Vertragsstaaten:
**AT BE CH FR GB IT LI NL**

(56) Entgegenhaltungen:
**DE-A- 2 940 436**
**DE-A- 3 209 018**
**DE-A- 3 325 800**
**DE-U- 8 202 679**
**GB-A- 2 004 966**

(73) Patentinhaber: **fischerwerke Artur Fischer GmbH & Co. KG, Weinhalde 14-18,**
**D-7244 Tumlingen/Waldachtal 3 (DE)**

(72) Erfinder: **Fischer, Artur, Dr. h. c., Weinhalde 34,**
**D-7244 Tumlingen/Waldachtal 3 (DE)**

## Beschreibung

Die Erfindung betrifft eine Verankerung einer Gewindestange in einem Bohrloch gemäß dem ersten Teil von Anspruch 1.

Zur Verankerung einer Gewindestange mittels einer Verbundmasse wird zunächst im Ankergrund ein Bohrloch erstellt, dessen Durchmesser etwas größer ist als der Außendurchmesser der Gewindestange. Danach wird in das Bohrloch eine Glasampulle eingeschoben, die die aus einem Polyesterharz, dem Härter und Zuschlagstoffen bestehende Verbundmasse enthält. Mit der in einer Bohrmaschine eingespannten Gewindestange wird die Ampulle im Bohrloch zerstört und die Komponenten der Verbundmasse durch Vermengen aktiviert. Nach dem Aushärten der Verbundmasse ist die Gewindestange fest im Bohrloch eingebunden und verankert. Die Verankerung beruht im wesentlichen auf dem Klebeverbund zwischen Verbundmasse und Bohrlochwandung. Dieser Verbund wird jedoch dann erheblich gemindert, wenn durch die Verankerungsstelle ein Riß verläuft. Durch die Vergrößerung des Bohrloches in Folge des Risses löst sich die Verbundmasse an der Bohrlochwandung ab, so dass nur noch geringe Haltekräfte vorliegen. Aufgrund dieses Umstandes sind Verankerungen in der Zugzone, in der üblicherweise Risse auftreten, ein Sicherheitsrisiko.

Aus der DE-A-3 325 800 ist eine Verankerung einer Gewindestange mittels einer Verbundmasse in einem Bohrloch eines Betonteils bekannt, wobei das Bohrloch mit einer sich erweiternden Hinterschneidung versehen ist. Die Gewindestange weist an ihrem Einführungsende ein schwenkbar gelagertes Kippsegment auf, welches in die im Querschnitt rechteckige Hinterschneidung einschwenkbar ist. Diese bekannte Verankerung ist zweiteilig und damit aufwendig in der Herstellung. Außerdem ist das Anbringen einer derartigen Hinterschneidung und das Einbringen der Gewindestange schwierig.

Weiterhin ist aus der DE-A-3 209 018 eine Verankerung bekannt, bei der zwar am Einführende einer Gewindestange ein Konus ausgebildet ist, der in eine entsprechende Hinterschneidung eingreift und dort mittels Verbundmasse gesichert werden kann, jedoch weist diese Verankerung eine über die Gewindestange in üblicher Weise geschobene Spreizhülse auf, die in die Hinterschneidung eingreift. Die Verbundmasse dient dabei zur Sicherung der Spreizhülse am Konus, der nicht einstückig mit der Gewindestange verbunden ist.

Der Erfindung liegt die Aufgabe zugrunde, in der Zugzone eine Verankerung mit einer Gewindestange und Verbundmasse zu ermöglichen.

Erfindungsgemäss wird dies durch die im Anspruch 1 angegebenen Merkmale erhalten. Nach der Herstellung der Hinterschneidung im Bereich des Bohrlochgrundes mit für diesen Zweck geeigneten Bohrgeräten wird entsprechend dem bekannten Verfahren die Verankerung durchgeführt. Die Gewindestange wird soweit in das Bohrloch eingetrieben, bis der Konus sich im Bereich der Hinterschneidung befindet. Nach dem Aushärten bildet der in Verbundmasse eingebettete Konus in der Hinterschneidung einen Formschluß. Beim Auftreten eines Risses durch die Verankerungsstelle löst sich zwar die Verbundmasse ebenfalls an der Bohrlochwandung ab, allerdings wird nunmehr die Gewindestange durch den Formschluß in der Hinterschneidung gehalten, so dass trotz Rißbildung hohe Haltewerte erzielbar sind. Durch die Konizität der Hinterschneidung wird die Bohrungsvergrösserung durch geringfügiges Nachrutschen ausgeglichen. Auch die Haltewerte in ungerissenem Beton werden durch die erfindungsgemäße Lösung verbessert, da durch die Hinterschneidung und dem Konus der Gewindestange eine zusätzliche radiale Kraftkomponente ansteht.

In weiterer Ausgestaltung der Erfindung kann der Winkel des Konuses der Gewindestange dem Winkel der Hinterschneidung und der größte Konusdurchmesser etwa dem Durchmesser des Bohrloches entsprechen. Aufgrund dieser Abstimmung ergibt sich auch im Bereich der Hinterschneidung eine gleichstarke Umhüllung der Gewindestange mit Verbundmasse wie im zylindrischen Schaftbereich.

In weiterer Ergänzung der Erfindung kann die Gewindestange unmittelbar vor dem Konus einen im Durchmesser reduzierten Abschnitt aufweisen. Durch die Gewindegänge wird beim Vermengen durch Eindrehen der Gewindestange die Verbundmasse in Richtung Bohrlochmündung gefördert. Der im Durchmesser reduzierte, gewindelose Abschnitt wirkt als Fördersperre, so daß die Hinterschneidung mit Verbundmasse auch bei zu langem Drehen der Gewindestange voll ausgefüllt bleibt.

Um im Bereich dieses Abschnittes zusätzlich auch einen Verbund mit der Gewindestange herzustellen, kann der im Durchmesser reduzierte Abschnitt umlaufende Rillen aufweisen.

Schließlich kann der Konus der Gewindestange mit einer Aufrauhung versehen sein. Durch diese Aufrauhung wird der Verbund zwischen dem Konus der Gewindestange und der Verbundmasse verbessert.

In weiterer Ausgestaltung der Erfindung kann die Stirnseite des Konuses der Gewindestange mit sternförmig angeordneten Kerben versehen sein, die sich bis zur Mantelfläche des Konuses erstrecken. Durch diese Kerben entstehen Schneidkanten, die das Zermahlen der Glasampulle und die Vermengung der Komponenten der Verbundmasse erleichtern. Ferner entstehen durch die Kerben Durchbrechungen im Bereich des größten Konusdurchmessers der Gewindestange, die beim Eintreiben der Gewindestange ein Aufsteigen der Verbundmasse über den Konus hinweg in den zylindrischen Teil des Bohrloches ermöglichen.

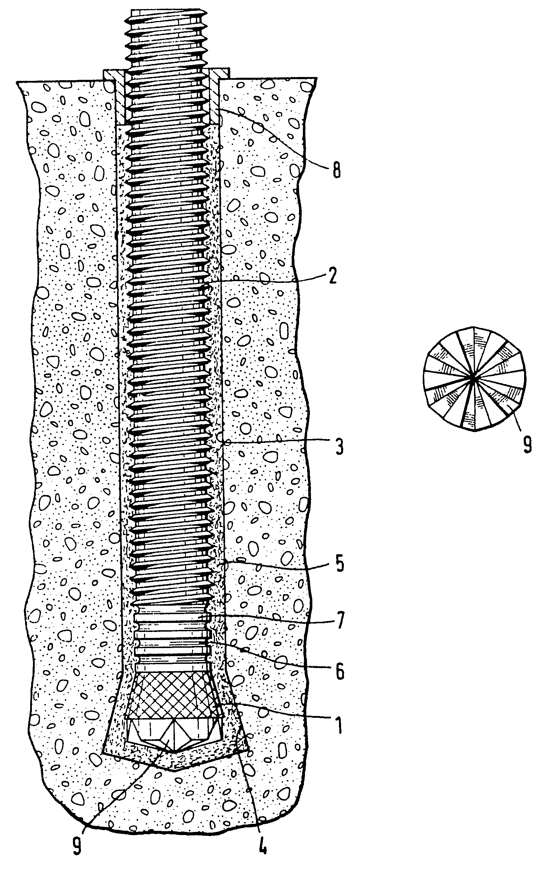

In der Zeichnung ist ein Ausführungsbeispiel der Erfindung dargestellt.

Die Verankerung der mit einem Konus 1 versehenen Gewindestange 2 erfolgt in einem Bohrloch 3, das im Bereich des Bohrlochgrundes mit einer sich zum Bohrlochgrund erweiternden Hinterschneidung 4 versehen ist. Nach der Erstellung des Bohrloches wird die Verbundmasse 5 in das Bohrloch 3 beispielsweise in Form einer Glasampulle eingebracht. Mit einem Bohrhammer wird die Gewindestange 2 in das Bohrloch 3 eingetrieben und dabei die Glasampulle zerstört, sowie die Komponenten der Verbundmasse durch Vermengen aktiviert. Die Gewindestange ist ordnungsgemäß gesetzt, wenn der Konus 1 der Gewindestange 2 sich im Bereich der Hinterschneidung 4 befindet. Dies kann beispielsweise durch eine Markierung an der Gewindestange angezeigt werden. Der sich an den Konus 1 anschließende, umlaufende Rillen 6 und gegenüber dem Durchmesser der Gewindestange 2 einen reduzierten Durchmesser aufweisende Abschnitt 7 bildet eine Fördersperre, so daß die Hinterschneidung 4 mit Verbundmasse 5 auch bei zu langem Drehen der Gewindestange 2 gefüllt bleibt. Zur Verbesserung des Verbundes zwischen Konus 1 der Gewindestange 2 und der Verbundmasse 5 ist der Konus 1 mit einer Aufrauhung versehen. Um das Herausfördern der Verbundmasse 5 durch die Gewindegänge der Gewindestange 2 zu verhindern, ist auf der Gewindestange ein Dichtring 8 aufgesetzt, der sich an der Bohrlochmündung abstützt und durch die Gewindestange ins Bohrloch eingeschoben wird.

Die Stirnseite des Konuses 1 der Gewindestange 2 ist mit sternförmig angeordneten Kerben 9 versehen, die sich bis zur Mantelfläche des Konuses 1 erstrecken. Somit entstehen Durchbrechungen im Bereich des größten Konusdurchmessers, die beim Eintreiben der Gewindestange 2 ein Aufsteigen der Verbundmasse am Konus 1 vorbei in den zylindrischen Teil des Bohrloches ermöglichen. Ferner entstehen durch die Kerben 9 Schneidkanten, die ein Zermahlen der Glasampulle und eine homogene Vermengung der Komponenten der Verbundmasse ermöglichen.

## Patentansprüche

1. Verankerung einer Gewindestange in einem Bohrloch eines Betonteils mittels einer zwischen Gewindestange und Bohrlochwand über die gesamte Länge des Bohrloches angeordneten Verbundmasse, wobei das Bohrloch mit einer sich erweiternden Hinterschneidung versehen ist und die Gewindestange an ihrem Einführende eine Erweiterung aufweist, die sich im Verankerungszustand im Bereich der Hinterschneidung befindet, dadurch gekennzeichnet, daß die Hinterschneidung sich konisch in Richtung Bohrlochgrund erweitert und daß die Erweiterung an der Gewindestange einstückig mit der Gewindestange ist und durch einen entsprechend der Hinterschneidung gerichteten Konus gebildet ist.

2. Verankerung nach Anspruch 1, dadurch gekennzeichnet, daß der Winkel des Konuses an der Gewindestange dem Winkel der Hinterschneidung und der größte Konusdurchmesser etwa dem Durchmesser des Bohrloches entspricht.

3. Verankerung nach Anspruch 1, dadurch gekennzeichnet, daß die Gewindestange unmittelbar vor dem Konus einen im Durchmesser reduzierten Abschnitt aufweist.

4. Verankerung nach Anspruch 3, dadurch gekennzeichnet, daß der im Durchmesser reduzierte Abschnitt umlaufende Rillen aufweist.

5. Verankerung nach Anspruch 1, dadurch gekennzeichnet, daß der Konus der Gewindestange mit einer Aufrauhung versehen ist.

6. Verankerung nach Anspruch 1, dadurch gekennzeichnet, daß die Stirnseite des Konuses der Gewindestange mit sternförmig angeordneten Kerben versehen ist, die sich bis zur Mantelfläche des Konuses erstrecken.

## Claims

1. Anchoring of a screw-bolt in a hole drilled in a concrete part by means of a compounded mass arranged between the screw-bolt and the wall of the drill hole for the entire length of the hole, wherein the drill hole is provided with a flaring undercut and at its insertion end the screw-bolt has a widened portion which, in the anchored state, is situated in the region of the undercut, characterised in that the undercut widens conically towards the bottom of the drill hole, and the widened portion on the screw-bolt is integral with the screw-bolt and is formed by a cone oriented to correspond with the undercut.

2. Anchoring according to claim 1, characterised in that the angle of the cone on the screw-bolt corresponds to the angle of the undercut and the largest cone diameter corresponds approximately to the diameter of the drill hole.

3. Anchoring according to claim 1, characterised in that the screw-bolt has a portion of reduced diameter immediately before the cone.

4. Anchoring according to claim 3, characterised in that the portion of reduced diameter has circumferential grooves.

5. Anchoring according to claim 1, characterised in that the cone of the screw-bolt is roughened.

6. Anchoring according to claim 1, characterised in that the front end of the cone of the screw-bolt is provided with notches arranged in the shape of a star which extend to the peripheral surface of the cone.

## Revendications

1. Ancrage d'un boulon fileté, dans un trou percé dans une partie en béton, au moyen d'une masse de matière composite de liaison disposée, sur toute la longueur du trou percé, entre le boulon fileté et la paroi du trou percé, ce trou percé étant muni d'une contre-dépouille qui s'élargit et le boulon fileté présentant, à son extrémité d'introduction, un élargissement qui se trouve, à l'état ancré, dans la zone de la contre-dépouille, ancrage caractérisé en ce que la contre-dépouille s'élargit coniquement en direction du fond du trou percé et en ce que l'élargissement du boulon fileté forme un ensemble monobloc avec le boulon fileté et est constitué par un cône disposé de façon à correspondre à la contre-dépouille.

2. Ancrage selon la revendication 1, caractérisé en ce que l'angle du cône du boulon fileté correspond à l'angle de la contre-dépouille et en ce que le plus grand diamètre du cône correspond approximativement au diamètre du trou percé.

3. Ancrage selon la revendication 1, caractérisé en ce que le boulon fileté présente, immédiatement avant le cône, un tronçon à diamètre réduit.

4. Ancrage selon la revendication 3, caractérisé en ce que le tronçon de diamètre réduit présente des nervures périphériques.

5. Ancrage selon la revendication 1, caractérisé en ce que le cône du boulon fileté est rendu rugueux.

6. Ancrage selon la revendication 1, caractérisé en ce que la face avant du cône du boulon fileté est munie d'entailles disposées en étoile, qui s'étendent jusqu'à la surface extérieure du cône.